# EUROPEAN PATENT SPECIFICATION

(11) **EP 3 722 202 B1**
(45) Date of publication and mention of the grant of the patent: **30.08.2023**
(21) Application number: 19212409.7
(22) Date of filing: 29.11.2019
(51) Int. Cl.: B64C 1/14, E05C 3/00, B64C 1/24, E05C 1/00, E05C 1/08, B63B 19/00

(54) **DOOR LATCH ARRANGEMENT**
TÜRRIEGELANORDNUNG
AGENCEMENT DE LOQUET DE PORTE

(30) Priority: 08.04.2019 US 201916377669
(43) Date of publication of application: 14.10.2020
(73) Proprietor: Rohr, Inc., Chula Vista, CA 91910-2098 (US)
(72) Inventor: GORMLEY, Timothy, Bonita, CA 91902 (US)
(74) Representative: Dehns

(56) References cited:
- US-A- 4 453 684
- US-A1- 2007 283 512
- US-A1- 2008 099 605
- US-A1- 2010 127 124

## Description

### BACKGROUND

### 1. Technical Field

This disclosure relates generally to aircraft doors, and more particularly to an aircraft door latching arrangement.

### 2. Background Information

Some commercial and business jet aircraft may include a passenger door which is hinged at or near the bottom of the door, opens outward, and provides a series of steps when the door is in the open or deployed position. These steps form the interior surface of the door. In some cases, it may be necessary to add an additional deployable step at the top of the door such that, when deployed, there is a comfortable step distance from the ground to the deployable step, and then to the series of steps built into the door.

Another feature of this type of aircraft door is that it may contain a manual-type locking, lifting, and/or venting arrangement that is driven via a handle disposed, for example, on a side of the door. However, tight geometric conditions in the vicinity of the door may present users, such as passengers or flight crew members, with a pinch hazard when operating the handle. Further, the user may be forced to operate the handle from a position which causes the user to assume an uncomfortable posture or requires the user to operate the handle with a single-handed operation. Further, the handle adds additional weight and space requirements to door. Accordingly, an improved system for operating an aircraft door is desirable.

US 4453684 A, US 2008/099605 A1 and US 2010/127124 A1 disclose prior art latch arrangements.

### SUMMARY

In one aspect, a latch arrangement for a door is provided according to claim 1.

In another aspect, an aircraft is provided according to claim 4.

In another aspect, a method for opening a door of an aircraft is provided according to claim 9.

Preferred embodiments of the invention are provided in the dependent claims.

The present disclosure, and all its aspects, embodiments and advantages associated therewith will become more readily apparent in view of the detailed description provided below, including the accompanying drawings.

### BRIEF DESCRIPTION OF THE DRAWINGS

FIG. 1 illustrates a perspective view of an aircraft including a door.
FIG. 2A illustrates a perspective view of an exemplary latch arrangement for a door of an aircraft in a closed position.
FIG. 2B illustrates another perspective view of the latch arrangement of FIG. 2A.
FIG. 3A a perspective view of the latch arrangement of FIG. 2A with the door in an open position.
FIG. 3B illustrates another perspective view of the latch arrangement of FIG. 3A.

### DETAILED DESCRIPTION

It is noted that various connections are set forth between elements in the following description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities.

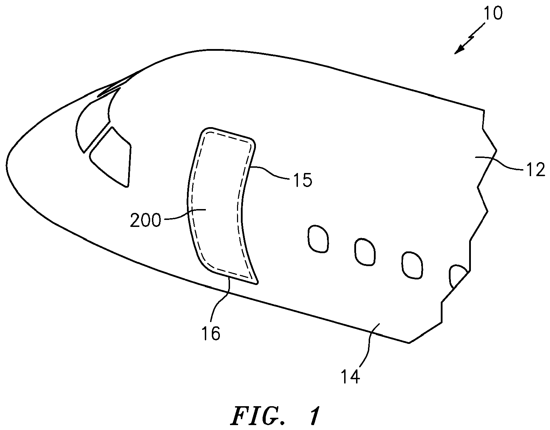

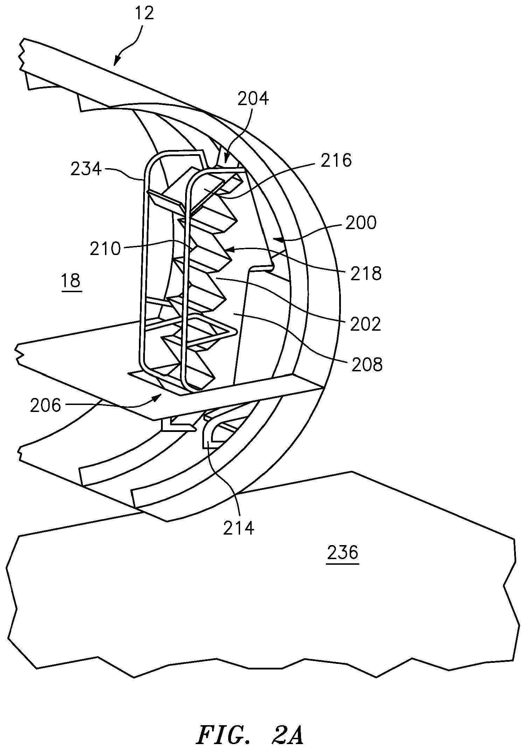

As illustrated in FIG. 1, an aircraft 10 includes a fuselage 12 having an exterior surface 14. The fuselage 12 includes a door frame 15 defining a door opening 16 disposed through the fuselage 12 to permit ingress to and egress from a cabin 18 (not shown, see FIG. 2A) of the aircraft 10, for example, by passengers and crew members of the aircraft 10. The fuselage 12 includes a door 200 configured to fit within the door frame 15 and to seal the door opening 16 during flight operations or other times when ingress and/or egress through the door opening 16 is not desirable.

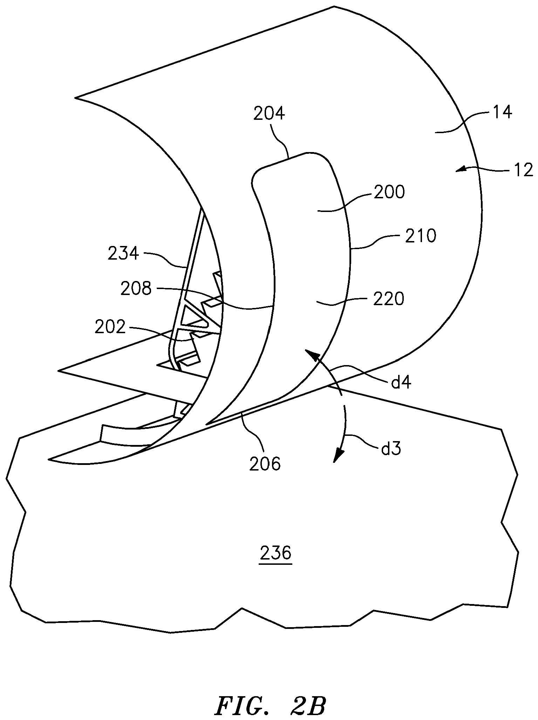

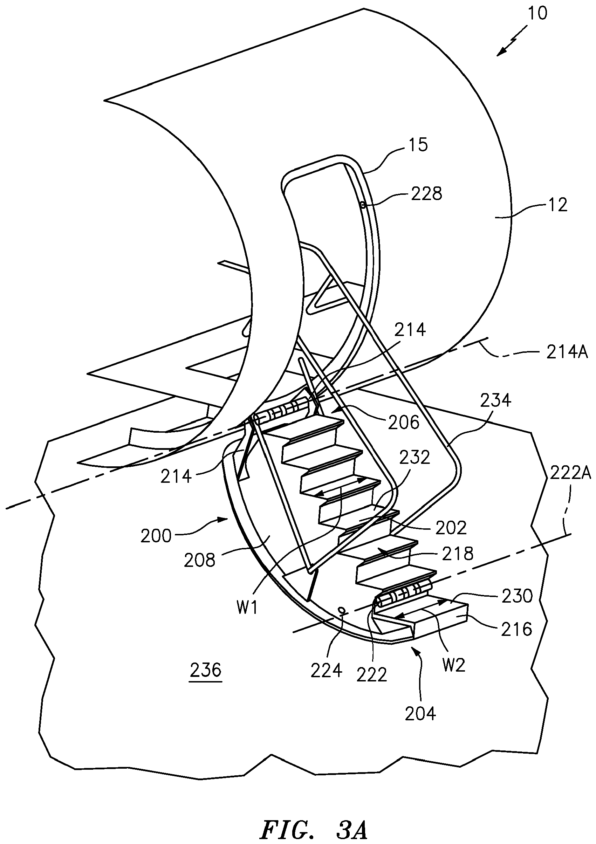

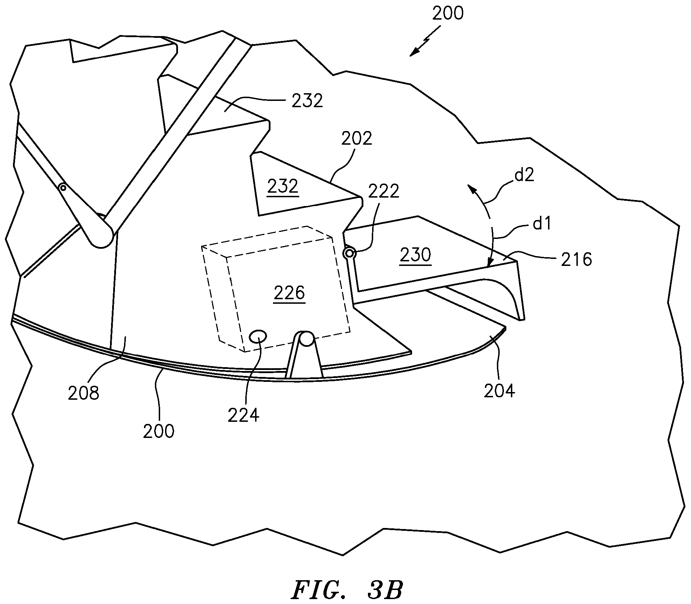

Referring to FIGS. 2A, 2B, 3A, and 3B, the door 200 includes an interior side 218 and an exterior side 220. The interior side 218 includes a plurality of integral steps 202 extending from the interior side 218 in series between a top 204 and a bottom 206 of the door 200. Each step of the plurality of integral steps 202 has a width W1 defined between a first door end 208 and a second door end 210 of the door 200. The door 200 is rotatably mounted to the fuselage 12 by at least one hinge 214 (e.g., a gooseneck hinge) proximate the bottom 206 of the door 200. The door 200 is configured for rotation about a hinge axis 214A of the at least one hinge 214 between an open position (see, e.g., FIGS. 3A and 3B) and a closed position (see, e.g., FIGS. 2A and 2B). With the door 200 in the open position, passengers may use the plurality of integral steps 202 for ingress or egress between the cabin 18 and the ground 236 or a platform disposed proximate the aircraft 10 to interface with the door 200.

It should be noted that the top 204 and bottom 206 of the door 200 refer to the "top" and "bottom" of the door when the door is in the closed position. However, the top 204 and bottom 206 of the door 200 will be used to refer to the same portion of the door 200 in both of the open and closed positions. Further, as used herein, a "closed position" will be used to refer to the door 200 in a position so as to form a substantially continuous exterior surface 14 with the fuselage 12 (e.g., the door 200 is positioned for flight). The "open position" will be used to refer to the door 200 in a fully-open position so as to permit passenger ingress/egress between the cabin 18 and the ground 236.

The door 200 includes at least one rotatable step 216 extending from the interior side 218 in series with the plurality of integral steps 202 between the top 204 bottom 206 of the door 200. The at least one rotatable step 216 is rotatably mounted to the interior side 218 by at least one hinge 222 and is configured for rotation about a hinge axis 222A of the at least one hinge 222 between a stowed position (see, e.g., FIG. 2A) and a deployed position (see, e.g., FIGS. 3A and 3B). The at least one rotatable step 216 in the deployed position is configured to provide a more comfortable step distance for passengers, for example, between the ground 236 and the integral step 202 most proximate the top 204 of the door 200 when the door 200 is in the open position.

In the illustrated embodiment, the at least one rotatable step 216 has a width W2 defined between the first door end 208 and the second door end 210 of the door 200. However, in some embodiments, the width W2 of the at least one rotatable step 216 may be equal to or less than the distance between the first door end 208 and the second door end 210. In some embodiments, a step surface 230 of the at least one rotatable step 216 in the deployed position may be substantially parallel to a step surface 232 of each of the plurality of integral steps 202. As used herein, the term "substantially" with regard to an angular relationship refers to the noted angular relationship +/- 5 degrees.

The door 200 includes a latch assembly 226 having at least one latch 224 configured to secure the door 200 in the closed position. For example, the at least one latch 224 may extend from the door 200 to engage with a respective latch receiver 228 disposed in the door frame 15, thereby securing the door 200 in the closed position. The latch receiver 228 may be, for example, a surface of the door frame 15 about an aperture disposed through the door frame 15 and configured to align with the at least one latch 224 when the door 200 is in the closed position. Alternatively, the at least one latch 224 may be retracted into the door, thereby disengaging the at least one latch 224 from the latch receiver 228 permitting the door 200 to be rotated from the closed position to the open position. In some embodiments, the latch assembly 226 may further include a handle disposed on the exterior side 220 of the door 200 and accessible from a position outside the aircraft 10. The exterior handle may be configured to engage or disengage the at least one latch 224.

The at least one latch 224 is in operable communication with the at least one rotatable step 216. Operation of the at least one latch 224 (i.e., effecting engagement or disengagement of the at least one latch 224 with the door frame 15) is effected by the at least one rotatable step 216. For example, rotation of the at least one rotatable step 216 in direction d1, from the stowed position to the deployed position, disengages the at least one latch 224 thereby effecting, at least in part, a repositioning of the door 200 by permitting the door 200 to be repositioned from the closed position to the open position. Subsequently, the door 200 may be rotated by a passenger or crew member (hereinafter "user") in direction d3 from the closed position to the open position. Alternatively, when securing the door 200, a user may rotate the door in direction d4 to the closed position and subsequently engage the at least one latch 224 by rotating the at least one rotatable step 216 in direction d2 to the stowed position.

The latch assembly 226 may be in operable communication with the at least one rotatable step 216 and the at least one latch 224 such that operation of the at least one rotatable step 216 effects a corresponding operation of the at least one latch 224 via the latch assembly 226. Operable communication of the latch assembly 226 between the at least one latch 224 and the at least one rotatable step 216 may include mechanical, electrical, or suitable communication which may be accomplished by any suitable means conventionally known in the art. Rotation of the at least one rotatable step 216 from the stowed position to the deployed position may additionally effect rotation of the door 200 (e.g., by a hydraulic, pneumatic, spring biasing, or other suitable actuation device) and/or venting of the cabin 18.

In some embodiments, the at least one rotatable step 216 may include a plurality of rotatable steps 216, for example, when an excessive step distance must be addressed at multiple points between the cabin 18 and the ground 236. The plurality of rotatable steps 216 may include an actuating rotatable step, similar to the at least one rotatable step 216 described above, configured to effect engagement and disengagement of the at least one latch 224. The plurality of rotatable steps 216 may further include one or more non-actuating rotatable steps which do not effect engagement and disengagement of the at least one latch 224.

In some embodiments, the door 200 may include at least one handrail 234 configured to assist passengers with ingress or egress to or from the cabin 18. As shown in FIGS. 2A and 3A, the at least one handrail 234 may extend from the interior side 218 of the door 200 and may be mounted to the door 200 at one or more positions proximate one of the first door end 208 and the second door end 210.

According to aspects of the present disclosure, operation of the at least one latch 224 without a conventional independent handle may provide a reduction in the weight of the door 200, and as a result, the weight of the aircraft 10. Additionally, the location of the at least one rotatable step 216 proximate the top of the door 200 and between the first door end 208 and the second door end 210 may permit a user to operate the at least one rotatable step 216 with two hands from an upright postural position.

## Claims

1. A latch arrangement for a door (200) comprising:
a plurality of steps (202, 216) configured to be disposed at an interior (218) of the door (200), one of the plurality of steps (216) being rotatable, in use, relative to the door (200) between a first position and a second position, the door (200) being movable between a closed and an open position; and
a latch (224) in operable communication with the rotatable step (216), the latch (224) being engageable with a latch receiver (228) to lock the door (200) in the closed position in response to the rotatable step (216) being in the first position, the latch (224) being disengageable from the latch receiver (228) in response to the rotatable step (216) being in the second position thereby allowing the door (200) to move to the open position,
wherein the rotatable step (216) is disposed, when arranged on the door, between the other steps (202) of the plurality of steps and a top (204) of the door (200).

2. The latch arrangement of claim 1, wherein a width (W2) of the rotatable step (216) is defined, when arranged on the door between a first door end (208) and a second door end (210), each door end (208, 210) extending between a top (204) and a bottom (206) of the door (200).

3. The latch arrangement of any preceding claim, wherein each step of the plurality of steps (202, 216) comprises a step surface (230, 232) and each step surface (230, 232) is substantially parallel to each other step surface (230, 232) when the rotatable step (216) is in the second position, wherein substantially means +/- 5 degrees.

4. An aircraft (10) comprising:
a fuselage (12); and
a door (200) mounted to the fuselage (12) by at least one hinge (222), the door (200) comprising a latch arrangement as claimed in any preceding claim.

5. The aircraft of claim 4 when comprising the latch arrangement of claim 2, wherein with the rotatable step (216) in the first position the latch (224) extends outward from one of the first door end (208) and the second door end (210).

6. The aircraft (10) of claim 4, wherein an exterior surface (220) of the door (200) forms a portion of an exterior surface of the fuselage (12) in the closed position.

7. The aircraft (10) of claim 4 or 6, wherein the at least one hinge (222) mounts the door (200) to the fuselage (12) proximate a bottom (206) of the door (200) and the door (200) is rotatable about a hinge axis (222A) of the at least one hinge (222).

8. The aircraft (10) of claim 5, wherein the door further comprises a handrail (234) extending from the interior (218) of the door (200) and mounted to the door (200) at a position proximate one of a first door end (208) and a second door end (210).

9. A method for opening a door (200) of an aircraft (10), the method comprising:
rotating a rotatable step (216) of a plurality of steps from a first position to a second position relative to the door (200) to disengage a latch (224) from a latch receiver (228), wherein the latch (224) is in operable communication with the rotatable step (216); and
moving the door (200) from a closed position to an open position;
wherein the plurality of steps is disposed at an interior (218) of the door (200), and
wherein the rotatable step (216) is disposed between the other steps (202) of the plurality of steps and a top (204) of the door (200).

10. The method of claim 9, wherein a width (W2) of the rotatable step (216) is defined between a first door end (208) and a second door end (210), each door end (208, 210) extending between a top (204) and a bottom (206) of the door (200).

11. The method of claim 9 or 10, wherein each step of the plurality of steps (202, 216) comprises a step surface (230, 232) and each step surface (230, 232) is substantially parallel to each other step surface (230, 232) when the rotatable step (216) is in the second position, wherein substantially means +/- 5 degrees.

## Patentansprüche

1. Riegelanordnung für eine Tür (200), umfassend:
eine Vielzahl von Stufen (202, 216), die dazu konfiguriert ist, in einem Inneren (218) der Tür (200) platziert zu sein, wobei eine der Vielzahl von Stufen (216) im Gebrauch relativ zu der Tür (200) zwischen einer ersten Position und einer zweiten Position drehbar ist, wobei die Tür (200) zwischen einer geschlossenen und einer offenen Position bewegbar ist; und
einen Riegel (224) in Wirkverbindung mit der drehbaren Stufe (216), wobei der Riegel (224) mit einer Riegelaufnahme (228) in Eingriff bringbar ist, um die Tür (200) in der geschlossenen Position als Reaktion darauf zu verriegeln, dass sich die drehbare Stufe (216) in der ersten Position befindet, wobei der Riegel (224) als Reaktion darauf, dass sich die drehbare Stufe (216) in der zweiten Position befindet, von der Riegelaufnahme (228) lösbar ist, wodurch ermöglicht wird, die Tür (200) in die offene Position zu bewegen,
wobei die drehbare Stufe (216) bei Anordnung an der Tür zwischen den anderen Stufen (202) der Vielzahl von Stufen und einer Oberseite (204) der Tür (200) platziert ist.

2. Riegelanordnung nach Anspruch 1, wobei eine Breite (W2) der drehbaren Stufe (216) bei Anordnung an der Tür zwischen einem ersten Türende (208) und einem zweiten Türende (210) definiert ist, wobei sich jedes Türende (208, 210) zwischen einer Oberseite (204) und einer Unterseite (206) der Tür (200) erstreckt.

3. Riegelanordnung nach einem der vorhergehenden Ansprüche, wobei jede Stufe der Vielzahl von Stufen (202, 216) eine Stufenfläche (230, 232) umfasst und jede Stufenfläche (230, 232) im Wesentlichen parallel zu jeder anderen Stufenfläche (230, 232) verläuft, wenn sich die drehbare Stufe (216) in der zweiten Position befindet, wobei im Wesentlichen +/- 5 Grad bedeutet.

4. Luftfahrzeug (10), umfassend:
einen Rumpf (12); und
eine Tür (200), die durch mindestens ein Scharnier (222) an dem Rumpf (12) befestigt ist, wobei die Tür (200) eine Riegelanordnung nach einem der vorhergehenden Ansprüche umfasst.

5. Luftfahrzeug nach Anspruch 4, wenn es die Riegelanordnung nach Anspruch 2 umfasst, wobei sich der Riegel (224) mit der drehbaren Stufe (216) in der ersten Position von einem des ersten Türendes (208) und des zweiten Türendes (210) nach außen erstreckt.

6. Luftfahrzeug (10) nach Anspruch 4, wobei
eine Außenfläche (220) der Tür (200) in der geschlossenen Position einen Abschnitt einer Außenfläche des Rumpfes (12) bildet.

7. Luftfahrzeug (10) nach Anspruch 4 oder 6, wobei das mindestens eine Scharnier (222) die Tür (200) an dem Rumpf (12) in der Nähe einer Unterseite (206) der Tür (200) befestigt und die Tür (200) um eine Scharnierachse (222A) des mindestens einen Scharniers (222) drehbar ist.

8. Luftfahrzeug (10) nach Anspruch 5,
wobei die Tür ferner einen Handlauf (234) umfasst, der sich von dem Inneren (218) der Tür (200) erstreckt und an der Tür (200) an einer Position in der Nähe eines von einem ersten Türende (208) und einem zweiten Türende (210) befestigt ist.

9. Verfahren zum Öffnen einer Tür (200) eines Luftfahrzeugs (10), wobei das Verfahren Folgendes umfasst:
Drehen einer drehbaren Stufe (216) von einer Vielzahl von Stufen von einer ersten Position in eine zweite Position relativ zu der Tür (200), um einen Riegel (224) von einer Riegelaufnahme (228) zu lösen, wobei sich der Riegel (224) in Wirkverbindung mit der drehbaren Stufe (216) befindet; und
Bewegen der Tür (200) von einer geschlossenen Position in eine offene Position;
wobei die Vielzahl von Stufen in einem Inneren (218) der Tür (200) platziert ist, und
wobei die drehbare Stufe (216) zwischen den anderen Stufen (202) der Vielzahl von Stufen und einer Oberseite (204) der Tür (200) platziert ist.

10. Verfahren nach Anspruch 9, wobei eine Breite (W2) der drehbaren Stufe (216) zwischen einem ersten Türende (208) und einem zweiten Türende (210) definiert ist, wobei sich jedes Türende (208, 210) zwischen einer Oberseite (204) und einer Unterseite (206) der Tür (200) erstreckt.

11. Verfahren nach Anspruch 9 oder 10, wobei jede Stufe der Vielzahl von Stufen (202, 216) eine Stufenfläche (230, 232) umfasst und jede Stufenfläche (230, 232) im Wesentlichen parallel zu jeder anderen Stufenfläche (230, 232) verläuft, wenn sich die drehbare Stufe (216) in der zweiten Position befindet, wobei im Wesentlichen +/- 5 Grad bedeutet.

## Revendications

1. Agencement de loquet de porte (200) comprenant :
une pluralité de gradins (202, 216) configurés pour être disposés à l'intérieur (218) de la porte (200), un parmi la pluralité de gradins (216) pouvant tourner, en utilisation, par rapport à la porte (200) entre une première position et une seconde position, la porte (200) étant mobile entre une position fermée et une position ouverte ; et
un loquet (224) en communication fonctionnelle avec le gradin (216) rotatif, le loquet (224) pouvant être mis en prise avec un récepteur de loquet (228) pour verrouiller la porte (200) dans la position fermée en réponse au fait que le gradin (216) rotatif est dans la première position, le loquet (224) pouvant être mis hors prise du récepteur de loquet (228) en réponse au fait que le gradin (216) rotatif est dans la seconde position permettant ainsi à la porte (200) de se déplacer vers la position ouverte,
dans lequel le gradin (216) rotatif est disposé, lorsqu'il est agencé sur la porte, entre les autres gradins (202) parmi la pluralité de gradins et un sommet (204) de la porte (200).

2. Agencement de loquet selon la revendication 1, dans lequel une largeur (W2) du gradin (216) rotatif est définie, lorsqu'elle est agencée sur la porte entre une première extrémité de porte (208) et une seconde extrémité de porte (210), chaque extrémité de porte (208, 210) s'étendant entre un sommet (204) et un fond (206) de la porte (200).

3. Agencement de loquet selon une quelconque revendication précédente, dans lequel chaque gradin parmi la pluralité de gradins (202, 216) comprend une surface de gradin (230, 232) et chaque surface de gradin (230, 232) est sensiblement parallèle à chaque autre surface de gradin (230, 232) lorsque le gradin (216) rotatif est dans la seconde position, dans lequel sensiblement signifie +/- 5 degrés.

4. Aéronef (10) comprenant :
un fuselage (12) ; et
une porte (200) montée sur le fuselage (12) par au moins une charnière (222), la porte (200) comprenant un agencement de loquet selon une quelconque revendication précédente.

5. Aéronef selon la revendication 4 comprenant l'agencement de loquet selon la revendication 2, dans lequel à l'aide du gradin (216) rotatif dans la première position, le loquet (224) s'étend vers l'extérieur à partir d'une parmi la première extrémité de porte (208) et la seconde extrémité de porte (210).

6. Aéronef (10) selon la revendication 4, dans lequel
une surface extérieure (220) de la porte (200) forme une partie de la surface extérieure du fuselage (12) en position fermée.

7. Aéronef (10) selon la revendication 4 ou 6, dans lequel l'au moins une charnière (222) monte la porte (200) sur le fuselage (12) à proximité d'un fond (206) de la porte (200), la porte (200) pouvant tourner autour d'un axe de charnière (222A) de l'au moins une charnière (222).

8. Aéronef (10) selon la revendication 5,
dans lequel la porte comprend en outre une main courante (234) s'étendant depuis l'intérieur (218) de la porte (200) et montée sur la porte (200) à une position proche d'une parmi une première extrémité de porte (208) et une seconde extrémité de porte ( 210) .

9. Procédé d'ouverture de porte (200) d'un aéronef (10), le procédé comprenant :
la rotation d'un gradin (216) rotatif parmi une pluralité de gradins à partir d'une première position à une seconde position par rapport à la porte (200) pour mettre hors de prise un loquet (224) d'un récepteur de loquet (228), dans lequel le loquet (224) est dans une communication fonctionnelle avec le gradin (216) rotatif ; et
le déplacement de la porte (200) d'une position fermée à une position ouverte ;
dans lequel la pluralité de gradins est disposée à l'intérieur (218) de la porte (200), et
dans lequel le gradin (216) rotatif est disposé entre les autres gradins (202) parmi la pluralité de gradins et un sommet (204) de la porte (200).

10. Procédé selon la revendication 9, dans lequel une largeur (W2) du gradin (216) rotatif est définie entre une première extrémité de porte (208) et une seconde extrémité de porte (210), chaque extrémité de porte (208, 210) s'étendant entre un sommet (204) et un fond (206) de la porte (200).

11. Procédé selon la revendication 9 ou 10, dans lequel chaque gradin parmi la pluralité de gradins (202, 216) comprend une surface de gradin (230, 232) et chaque surface de gradin (230, 232) est sensiblement parallèle à chaque autre surface de gradin ( 230, 232) lorsque le gradin (216) rotatif est dans la seconde position, dans laquelle sensiblement signifie +/- 5 degrés.
